# EUROPÄISCHE PATENTSCHRIFT

(11) **EP 2 061 141 B1**
(45) Veröffentlichungstag und Bekanntmachung des Hinweises auf die Patenterteilung: **12.05.2010**
(21) Anmeldenummer: 07022399.5
(22) Anmeldetag: 19.11.2007
(51) Int. Cl.: H02K 49/04, H02K 7/104

(54) **Elektrische Maschine mit Magnetbremse direkt am Rotor**
Electric machine with magnetic brake attached to the rotor
Machine électrique dotée de freins magnétiques directement sur le rotor

(43) Veröffentlichungstag der Anmeldung: 20.05.2009
(73) Patentinhaber: SIEMENS AKTIENGESELLSCHAFT, 80333 München (DE)
(72) Erfinder: Eckert, Frank, 97647 Hausen (DE)

(56) Entgegenhaltungen:
- EP-A- 1 564 868
- JP-A- 9 028 056
- JP-A- 2005 080 329

## Beschreibung

Die vorliegende Erfindung betrifft eine elektrische Maschine mit einem Gehäuse oder Stator, einem Rotor, der ein Blechpaket aufweist und der in dem Gehäuse drehbar gelagert ist, und einer Magnetbremse. Die Magnetbremse ihrerseits besitzt mindestens einen Permanentmagneten, der drehfest an dem Gehäuse oder Stator befestigt und in axialer Richtung magnetisiert ist, einen Elektromagneten, der axial an den Permanentmagneten anschließend angeordnet und mit diesem fest verbunden ist, und einen ringförmigen Anker, der drehfest mit dem Rotor verbunden ist und mit den beiden Magneten zusammenwirkt, wobei die Hauptrichtung des Magnetfelds des Elektromagneten ebenfalls in axialer Richtung verläuft.

Permanentmagneterregte Einbaubremsen, d.h. Magnetbremsen, für Elektromotoren bestehen üblicherweise aus einem Permanentmagneten und einem Elektromagneten, die mit einem Anker zusammenwirken. Der Elektromagnet bzw. Spulenkörper stellt dabei meist ein Statorteil dar, während der Anker in der Regel als Rotorteil realisiert ist.

Funktionsbedingt besitzt das Rotorteil typischerweise einen axialfedernden, magnetischen Stahlanker und einen in der Regel amagnetischen Trägerflansch. Dieser mehrteilige Aufbau resultiert in einer zusätzlichen Baulänge des Elektromotors. Außerdem ergeben sich hohe Kosten für die Bauteile und die Montage des Rotorteils. Schließlich beeinträchtigt die hohe Massenträgheit auf Grund des massiven Stahlankers die Dynamik der elektrischen Maschine (z.B. Servomotor).

Aus der Druckschrift EP 1 564 868 A1 ist ein Elektromotor mit einer Wirbelstrombremse bekannt, um den Elektromotor drehzahlabhängig abzubremsen. Die Lager des Rotors sind in einem ersten Flansch und in einem zweiten Flansch eingespannt. Die Wirbelstrombremse wird durch ein Zusammenwirken des zweiten Flansches mit gegenüberliegenden Bremsmagneten, welche über einen Träger mit dem Rotor drehfest verbunden sind, gebildet. Der Träger bildet einen Rückschluss für die Bremsmagnete der Wirbelstrombremse.

Weiterhin offenbart die Druckschrift JP 2005080329 A ein Wirbelstromreduktionsgetriebe. Ein scheibenförmiger Anker steht einer Magneteinrichtung gegenüber. Die Magneteinrichtung besitzt ein Gehäuse, in dem ein Magnet in axialer Richtung bezüglich der Scheibe federnd verschiebbar gelagert ist.

Weiterhin offenbart die Druckschrift JP 09028056 A einen Elektromotor ebenfalls mit einer Magnetbremse. Ein Magnetelement ist an einem Träger montiert, welcher seinerseits auf der Welle des Motors befestigt ist.

Die Aufgabe der vorliegenden Erfindung besteht somit darin, eine elektrische Maschine mit Einbaubremse möglichst klein und kostengünstig zu gestalten und dabei eine hohe Dynamik der elektrischen Maschine zu gewährleisten.

Erfindungsgemäß wird diese Aufgabe gelöst durch eine elektrische Maschine mit einem Stator einem Rotor, der ein Blechpaket aufweist und der in einem Gehäuse oder Stator drehbar gelagert ist, und einer Magnetbremse einschließlich mindestens eines Permanentmagneten, der drehfest an dem Gehäuse oder Stator befestigt und in axialer Richtung magnetisiert ist, eines Elektromagneten, der axial an den Permanentmagneten anschließend angeordnet und mit diesem fest verbunden ist, wobei die Hauptrichtung des Magnetfelds des Elektromagneten in axialer Richtung verläuft, und eines ringförmigen Ankers, der drehfest mit dem Rotor verbunden ist und mit den beiden Magneten zusammenwirkt, wobei der Permanentmagnet axial federnd an dem Gehäuse oder Stator befestigt ist, der ringförmige Anker direkt und starr an dem Rotor befestigt ist, und der Stator umlaufend angeordnete Wickelköpfe aufweist, radial unter denen sich ein Wickelkopfraum befindet, innerhalb dessen die Magnetbremse vollständig angeordnet ist.

Durch die axialbewegliche Lagerung des gesamten Magnetmoduls (Elektromagnet und Permanentmagnet) sowie die unmittelbare Befestigung des Ankers an dem Rotor bzw. Rotorblechpaket kann auf zusätzliche Komponenten wie einen Trägerflansch verzichtet werden. Dadurch sinken nicht nur die Bauteilekosten und die Bauteilezahl, sondern auch die Trägheit des Rotors. Außerdem kann die elektrische Maschine axial kürzer gebaut werden.

Vorzugsweise stellt der ringförmige Anker gleichzeitig ein Endblech des Blechpakets des Rotors dar. Durch diese Mehrfachfunktionalität kann ebenfalls ein zusätzliches Bauteil eingespart und die Rotorträgheit verringert werden.

Besonders vorteilhaft ist, wenn der Elektromagnet derart verschaltet ist, dass er zusammen mit einem Aktivteil der elektrischen Maschine bestromt und dabei die Magnetkraft des Permanentmagneten zum größten Teil kompensiert wird. Hierdurch lässt sich die Einbaubremse als Haltebremse nutzen, wenn die elektrische Maschine nicht bestromt wird und der Permanentmagnet dann den Anker unter Bremswirkung anzieht.

Zwischen dem Gehäuse oder Stator und dem Permanentmagneten oder Elektromagneten kann eine segmentierte Blattfeder oder Ringfeder angeordnet sein, die in einem vorbestimmten Maß eine axiale Bewegung des Elektromagneten und des Permanentmagneten relativ zu dem Gehäuse zulässt und ein Bremsmoment von dem Elektromagneten und dem Permanentmagneten auf das Gehäuse oder den Stator überträgt. Die Blatt- oder Ringfeder erfüllt dabei mehrere Anforderungen, nämlich die der axialen Bewegbarkeit des Magnetmoduls sowie der Momentenübertragung zum Gehäuse oder Stator direkt oder beispielsweise mittelbar über einen Rahmen zum Gehäuse.

Die elektrische Maschine weist einen Stator mit Wicklungen auf, wobei die Magnetbremse vollständig innerhalb des Wickelkopfraüms untergebracht ist. Dies ist insbesondere deswegen möglich, weil auf einen Trägerflansch verzichtet werden kann.

Außerdem führt dies zu einer deutlichen axialen Verkürzung der elektrischen Maschine.

Die vorliegende Erfindung wird nun anhand der beigefügten Zeichnungen näher erläutert, in denen zeigen:
- FIG 1: einen Schnitt durch einen Teil einer elektrischen Maschine gemäß internem Stand der Technik und
- FIG 2: einen Schnitt durch einen Teil einer elektrischen Maschine gemäß einem Beispiel der vorliegenden Erfindung.

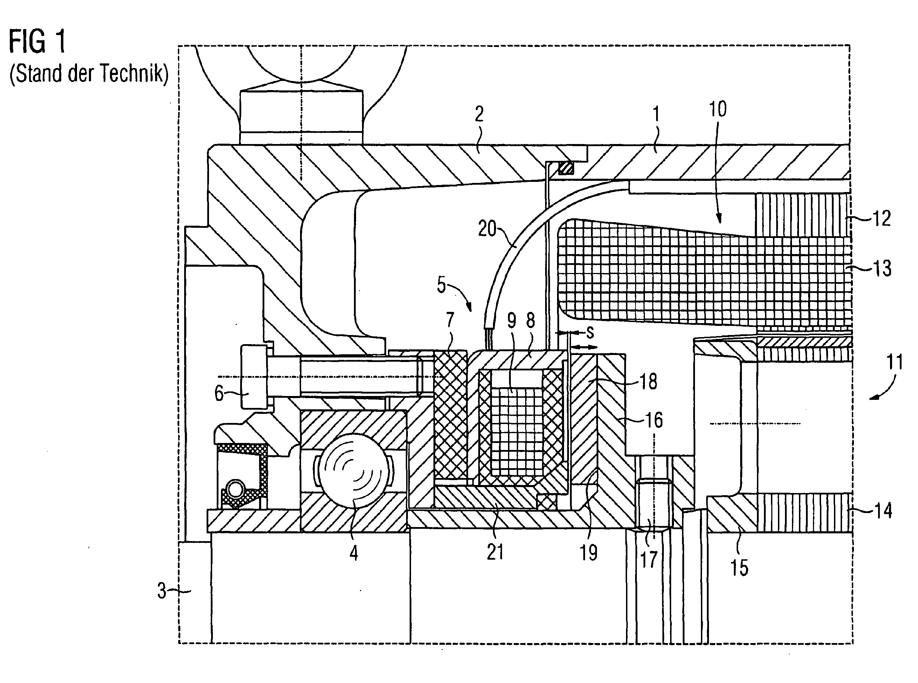

Das nachfolgend näher geschilderte Ausführungsbeispiel stellt eine bevorzugte Ausführungsform der vorliegenden Erfindung dar. Zunächst sei jedoch an Hand von FIG 1 ein Elektromotor mit gebräuchlichem Aufbau näher erläutert, um das Prinzip der vorliegenden Erfindung besser zu verstehen.

Der in FIG 1 dargestellte Elektromotor besitzt ein Gehäuse 1 und ein daran befestigtes Lagerschild 2. Bei gehäuselosem Elektromotor ist das Lagerschild üblicherweise am Stator befestigt.

In dem Lagerschild ist eine Welle 3 mit Hilfe eines Drehlagers 4 drehbar gelagert. An dem Lagerschild 2 ist ein Magnetmodul 5 einer Einbaubremse (Magnetbremse) starr mit Hilfe einer Schraube 6 befestigt. Das Magnetmodul 5 umfasst einen ringförmigen Permanentmagneten 7 gegebenenfalls auch mehrere Permanentmagnete sowie eine in einem Winkelkern 8 angeordnete Spule 9. Die Komponenten sind dabei wie folgt unmittelbar hintereinander axial angeordnet: Permanentmagnet 7, ein Schenkel des Winkelkerns 8 und Spule 9.

Der Elektromotor besitzt zwei Aktivteile, nämlich den Stator 10 und den Rotor 11. Der Stator 10 seinerseits besitzt ein Blechpaket 12 und daraus axial hervorstehende Wickelköpfe 13. Die Wickelköpfe 13 sind umlaufend angeordnet, so dass sich in ihrem Inneren, d.h. radial unter ihnen für die Zwecke der vorliegenden Ausführungen ein "Wickelkopfraum" definieren lässt.

Der Rotor 11 besitzt ein Blechpaket 14 sowie eine Endscheibe 15, die beide drehfest auf der Welle 3 angeordnet sind. Zwischen der Endscheibe 15 des Rotors 11 und der Spule 9 bzw. dem Winkelkern 8 des Magnetmoduls 5 befindet sich ein Trägerflansch 16, der mit Hilfe einer Klemmschraube 17 drehfest an die Welle 3 geklemmt ist. Mit Hilfe einer segmentierten Blatt- oder Ringfeder (in FIG 1 nicht dargestellt) ist ein ringförmiger Stahlanker 18 drehfest an dem Trägerflansch 16 befestigt. Der Stahlanker 18 ist damit in dem Spalt 19 axial federnd mit dem in der Regel amagnetischen Trägerflansch 16 verbunden.

Im Betriebsfall, d.h. wenn der Stator 10 bestromt wird, wird auch die Spule 9 bestromt, was durch die Leitung 20 angedeutet ist. In diesem Fall erzeugt der Elektromagnet, d.h. die Spule 9, ein Magnetfeld, das dem Magnetfeld des Permanentmagneten 7 entgegengerichtet ist. Folglich zieht das Magnetmodul 5 den Stahlanker 18 nicht an und die Blatt- oder Ringfeder in dem Spalt 19 zieht den Stahlanker 18 an den Trägerflansch 16, so dass zwischen dem Winkelkern 8 bzw. einem der Welle 3 zugewandten Montageteil 21 und dem Stahlanker 18 ein Spalt S besteht.

Andernfalls, wenn der Strom abgeschaltet ist und weder der Stator 10 noch die Spule 9 bestromt werden, bewirkt das Magnetfeld des Permanentmagneten 7, weitergeleitet über den Winkelkern 8 und das Montageteil 21 eine magnetische Anziehung des Stahlankers 18 entgegen der Kraft der Blatt- oder Ringfeder. Dadurch ergibt sich eine Reibkraft zwischen dem Winkelkern 8 und dem Montageteil 21 einerseits sowie dem Stahlanker 18 andererseits. Das entsprechende Moment wird von dem Trägerflansch 16 über die Blatt- oder Ringfeder im Spalt 19 übertragen. Der Rotor 11 wird dadurch gebremst und/oder gehalten. Beim Lüften der Bremse, also bei der Bestromung der Spule 9 entfernt sich der Stahlanker 18 wieder von dem Magnetmodul 5, so dass sich wieder der Luftspalt S einstellt.

Nachteilig an dieser Konstruktion ist der massive Trägerflansch 16, der die Funktion einer Nabe besitzt und ein hohes Trägheitsmoment aufweist. Außerdem besitzt er eine deutliche axiale Länge, so dass die Einbaubremse axial außerhalb des Wickelkopfraums anzuordnen ist.

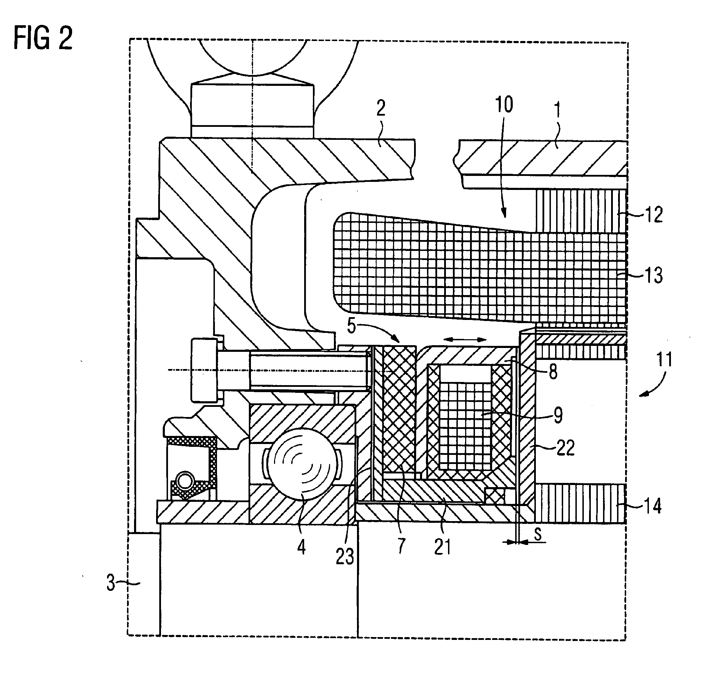

Zur Vermeidung dieser Nachteile wird ein erfindungsgemäßer Elektromotor oder eine entsprechende andere elektrische Maschine gemäß dem Beispiel von FIG 2 konstruiert. Der beispielhafte Motor ist hier wie in FIG 1 aus einem Gehäuse 1 und einem Lagerschild 2 sowie einer darin mit Hilfe eines Drehlagers 4 gelagerten Welle 3 aufgebaut. Der Stator 10 mit seinem Blechpaket 12 und den Wickelköpfen 13, die den "Wickelkopfraum" definieren, ist ebenfalls unverändert. Der Rotor 11 mit seinem Blechpaket 14 besitzt hier allerdings als Endscheibe einen ringförmigen Stahlanker 22. Alternativ kann der Stahlanker 22, ohne die Funktion einer Endscheibe zu übernehmen, auch direkt an die Stirnseite des Rotors 11 montiert sein.

Mit dem Stahlanker 22 wirkt hier wieder das Magnetmodul 5 zusammen, das aus dem Permanentmagneten 7, der Spule 9, dem Winkelkern 8 und dem Montageteil 21 aufgebaut ist. Das Magnetmodul 5 ist hier jedoch mit Hilfe einer segmentierten Blatt- oder Ringfeder in dem Spalt 23 axial beweglich mit dem Lagerschild 2 bzw. dem Gehäuse 1 federnd verbunden. Dies bedeutet, dass nicht wie im Beispiel von FIG 1 der Stahlanker, sondern das Magnetmodul 5 in einem gewissem Maß axial beweglich ist, was durch den Doppelpfeil in FIG 2 angedeutet ist.

Im Betriebsfall, d.h. bei Bestromung des Stators 10 sowie der Spule 9 wird das Magnetfeld des Permanentmagneten 7 aufgehoben, so dass sich Magnetmodul 5 und Stahlanker 22 nicht anziehen. Es resultiert wiederum ein Spalt S zwischen Magnetmodul 5 und Stahlanker 22. In diesem Zustand zieht die Blatt- oder Ringfeder das Magnetmodul 5 in FIG 2 nach links, d.h. vom Rotor 11 weg zum Lagerschild 2.

Wird der Stator 10 und die Spule 9 nicht bestromt, so ist auch hier das Magnetfeld des Permanentmagneten 7 maßgebend, so dass sich das Magnetmodul 5 und der Stahlanker 22 anziehen. Der Luftspalt S wird entgegen der Kraft der Blatt- oder Ringfeder auf null reduziert und der Rotor 11 wird durch Reibung am Magnetmodul 5 gehalten und/oder gebremst. Das entstehende Bremsmoment überträgt die Blatt- oder Ringfeder am Magnetmodul 5 auf das Lagerschild 2 bzw. einen daran befestigten Montagering, wobei sich der Spalt 23, in dem sich die Blatt- oder Ringfeder befindet, zwischen dem Magnetmodul 5 und dem Lagerschild 2 bzw. der Montagekomponente etwas öffnet. Das Magnetmodul 5 ist also hier axial federnd mit dem Lagerschild 2 verbunden.

Erfindungsgemäß kann somit an dem Rotor 11 bzw. der Welle 3 auf eine amagnetische Nabe (Trägerflansch 16) sowie die segmentierte Blatt- oder Ringfeder an dem Rotor 11 verzichtet werden. Dadurch reduziert sich die Massenträgheit des Rotors des Elektromotors, was sich insbesondere im dynamischen Betrieb beispielsweise bei Servomotoren vorteilhaft auswirkt (die Blatt- oder Ringfeder ist ohne Auswirkungen auf die Massenträgheit des Rotors am Gehäuse angebracht). Durch die Einsparung der Nabe, die damit verbundene Bauteilereduzierung sowie den resultierenden reduzierten Montageaufwand lässt sich außerdem in vorteilhafter Weise eine Kosteneinsparung erzielen. Besonders vorteilhaft ist jedoch auf Grund des Verzichts der Nabe der verkürzte Einbauraum der Magnetbremse. Sie lässt sich vollständig innerhalb des Wickelkopfraums unterbringen, d.h. sie ragt weder axial noch radial aus der Wickelkopfanordnung. Somit ist insgesamt eine kompaktere Bauweise des Motors bzw. der elektrischen Maschine möglich.

## Patentansprüche

1. Elektrische Maschine mit
- einem Stator (10),
- einem Rotor (11), der ein Blechpaket (14) aufweist und der in einem Gehäuse (1) oder Stator (10) drehbar gelagert ist, und
- einer Magnetbremse (5,22) einschließlich
○ mindestens eines Permanentmagneten (7), der drehfest an dem Gehäuse (1) befestigt und in axialer Richtung magnetisiert ist,
○ eines Elektromagneten (9), der axial an den Permanentmagneten (7) anschließend angeordnet und mit diesem fest verbunden ist, wobei die Hauptrichtung des Magnetfelds des Elektromagneten in axialer Richtung verläuft, und
○ eines ringförmigen Ankers (22), der drehfest mit dem Rotor (11) verbunden ist und mit den beiden Magneten (7, 9) zusammenwirkt,
**dadurch gekennzeichnet, dass**
- der Permanentmagnet (7) axial federnd an dem Gehäuse (1) oder Stator (10) befestigt ist,
- der ringförmige Anker (22) direkt und starr an dem Rotor (11) befestigt ist und
- der Stator (10) umlaufend angeordnete Wickelköpfe (13) aufweist, radial unter denen sich ein Wickelkopfraum befindet, innerhalb dessen die Magnetbremse (5,22) vollständig angeordnet ist.

2. Elektrische Maschine nach Anspruch 1, wobei der ringförmige Anker (22) ein Endblech des Blechpakets (14) des Rotors (11) darstellt.

3. Elektrische Maschine nach Anspruch 1 oder 2, wobei der Elektromagnet (9) derart verschaltet ist, dass er zusammen mit einem Aktivteil der elektrischen Maschine bestromt und dabei die Magnetkraft des Permanentmagneten (7) zum größten Teil kompensiert wird.

4. Elektrische Maschine nach einem der vorhergehenden Ansprüche, wobei zwischen dem Gehäuse (1) oder Stator (10) und dem Permanentmagneten (7) oder Elektromagneten (9) eine segmentierte Blattfeder oder Ringfeder angeordnet ist, die in einem vorbestimmten Maß eine axiale Bewegung des Elektromagneten (9) und des Permanentmagneten (7) relativ zu dem Gehäuse (1) oder Stator (10) zulässt und ein Bremsmoment von dem Elektromagneten (9) und dem Permanentmagneten (7) auf das Gehäuse (1) auf den Stator (10) überträgt.

## Claims

1. Electrical machine with
- a stator (10),
- a rotor (11) which has a laminated core (14) and which is rotatably mounted in a housing (1) or stator (10), and
- a magnetic brake (5, 22) including
○ at least one permanent magnet (7) which is fixed to the housing (1) so that it cannot rotate and is magnetized in an axial direction,
○ an electromagnet (9) which is arranged so that it is connected axially to the permanent magnet (7) and is securely fixed thereto, wherein the main direction of the magnetic field of the electromagnet runs in an axial direction, and
○ a ring-shaped armature (22) which is fixed to the rotor (11) so that it cannot rotate and acts together with the two magnets (7, 9),
**characterized in that**
- the permanent magnet (7) is axially resiliently fixed to the housing (1) or stator (10),
- the ring-shaped armature (22) is fixed directly and rigidly to the rotor (11), and
- the stator (10) has circumferentially arranged winding heads (13), radially beneath which is located a winding head space within which the magnetic brake (5, 22) is completely arranged.

2. Electrical machine according to Claim 1, wherein the ring-shaped armature (22) constitutes an end plate of the laminated core (14) of the rotor (11).

3. Electrical machine according to Claim 1 or 2, wherein the electromagnet (9) is connected in such a way that current passes through it together with an active part of the electrical machine, and in doing so the magnetic force of the permanent magnet (7) is to a great extent compensated for.

4. Electrical machine according to one of the preceding claims, wherein a segmented leaf spring or ring spring, which allows a predefined amount of axial movement of the electromagnet (9) and of the permanent magnet (7) relative to the housing (1) or stator (10) and transmits a braking torque from the electromagnet (9) and the permanent magnet (7) onto the housing (1) or stator (10), is arranged between the housing (1) or stator (10) and the permanent magnet (7) or electromagnet (9).

## Revendications

1. Machine électrique comprenant
- un stator ( 10 ),
- un rotor ( 11 ), qui a un paquet ( 14 ) de tôles et qui est monté tournant dans un carter ( 1 ) ou dans le stator ( 10 ), et
- un frein ( 5, 22 ) magnétique comprenant
○ au moins un aimant ( 7 ) permanent, qui est fixé sans possibilité de tourner sur le carter ( 11 ) et qui est aimanté dans la direction axiale,
○ un électroaimant ( 9 ), qui est disposé axialement à la suite de l'aimant ( 7 ) permanent et qui est relié de manière fixe à celui-ci, la direction principale du champ magnétique de l'électroaimant s'étendant dans la direction axiale, et
○ une culasse ( 22 ) annulaire, qui est solidaire en rotation du rotor ( 11 ) et qui coopère avec les deux aimants ( 7, 9 ),
**caractérisée en ce que**
- l'aimant ( 7 ) permanent est fixé de manière élastique axialement au carter ( 1 ) ou au stator ( 10 ),
- la culasse ( 22 ) annulaire est fixée directement et rigidement au rotor ( 11 ) et
- le stator ( 10 ) a des têtes ( 13 ) de bobine disposées tout autour, parmi lesquelles radialement se trouve un espace de tête d'enroulement, à l'intérieur duquel le frein ( 5, 22 ) magnétique est disposé entièrement.

2. Machine électrique suivant la revendication 1, dans laquelle la culasse ( 22 ) annulaire constitue une tôle d'extrémité du paquet ( 14 ) de tôles du rotor.

3. Machine électrique suivant la revendication 1 ou 2, dans laquelle l'électroaimant ( 9 ) est câblé, de manière à être parcouru par du courant ensemble avec une partie active de la machine électrique et à compenser ainsi pour la plus grande partie le champ magnétique de l'aimant ( 7 ) permanent.

4. Machine électrique suivant l'une des revendications précédentes, dans laquelle il est disposé, entre le carter ( 1 ) ou le stator ( 10 ), l'aimant ( 7 ) permanent ou l'électroaimant ( 9 ), un ressort à lame segmenté ou un ressort bague, qui autorise, dans une mesure déterminée à l'avance, un déplacement axial de l'électroaimant et de l'aimant ( 7 ) permanent par rapport au carter ( 1 ) ou au stator ( 10 ) et transmet un couple de freinage de l'électroaimant ( 9 ) et de l'aimant ( 7 ) permanent au carter ( 1 ) ou au stator ( 10 ).
